# EUROPEAN PATENT APPLICATION

(11) **EP 4 280 157 A1**
(43) Date of publication of application: **22.11.2023**
(21) Application number: 22173832.1
(22) Date of filing: 17.05.2022
(51) Int. Cl.: G06T 7/73, G06T 19/00, G06V 20/00

(54) **EXTENDED REALITY (XR) OBJECT ALIGNMENT METHOD AND XR PROJECTION SYSTEM**

(71) Applicant: Holo-Light GmbH, 6020 Innsbruck (AT)
(72) Inventor: Werlberger, Alexander, 6020 Innsbruck (AT); Landgraf, Philipp, 6020 Innsbruck (AT); Tschitschenkow, Denis, 6020 Innsbruck (AT)
(74) Representative: Prinz & Partner mbB

(57) **Abstract**

An extended reality (XR) object alignment method for aligning an XR image with a real object in a field of view of an XR device (12) is described, wherein the XR device (12) comprises at least one camera (18). The object alignment method comprises the following steps:
- capturing, by means of the at least one camera of the XR device (12), at least one image, thereby generating image data associated with the at least one image;
- determining momentary position data, wherein the momentary position data is associated with a momentary position of the XR device;
- recognizing, by means of an external computer device (14), at least one object in the at least one image based on the image data, thereby obtaining object data;
- determining, by means of the external computer device (14), relative position data based on the object data and based on the momentary position data, wherein the relative position data is associated with a relative position of the XR device (12) and the at least one recognized object; and
- generating, by means of an XR application module (24), XR image data based on the object data and based on the relative position data, wherein the XR image data is associated with at least one XR image to be displayed on the XR device (12).

Further, an XR projection system (10) is described.

## Description

The present invention generally relates to an extended reality (XR) object alignment method for aligning an XR image with a real object in a field of view of an XR device. The present invention further relates to an XR projection system.

In certain XR applications, so-called alignment and tracking techniques are used. Therein, "alignment" relates to recognizing and determining the positions of real-world objects in the field of view of an XR device, while "tracking" corresponds to alignment over time.

However, usual alignment and tracking algorithms are computationally expensive, such that usual XR devices cannot execute the full algorithms due to their restricted computational capacity.

A known solution to circumvent this problem is to reduce the polygon size of 3D models and/or to pre-calculate different view angles of 3D models that are to be aligned with the real-world objects.

However, this leads to a rather slow alignment or tracking process due to the extra steps required.

Thus, the object of the present invention is to provide an XR alignment method that has a reduced processing time and that can be performed in combination with any XR device.

According to the invention, the problem is solved by an extended reality (XR) object alignment method for aligning an XR image with a real object in a field of view of an XR device, wherein the XR device comprises at least one camera. The object alignment method comprises the following steps:
- capturing, by means of the at least one camera of the XR device, at least one image, thereby generating image data associated with the at least one image;
- determining momentary position data, wherein the momentary position data is associated with a momentary position of the XR device;
- transmitting the generated image data to an external computer device that is connected with the XR device in a signal-transmitting manner;
- recognizing, by means of the external computer device, at least one object in the at least one image based on the image data, thereby obtaining object data;
- determining, by means of the external computer device, relative position data based on the object data and based on the momentary position data, wherein the relative position data is associated with a relative position of the XR device and the at least one recognized object;
- inputting the object data and the relative position data into an XR application module; and
- generating, by means of the XR application module, XR image data based on the object data and based on the relative position data, wherein the XR image data is associated with at least one XR image to be displayed on the XR device.

Therein and in the following, the term "position" is understood to denote a location and/or orientation.

Accordingly, the term "momentary position of the XR device" relates to the momentary location and/or to the momentary orientation of the XR device, etc.

The term "XR device" is understood to denote an electronic device that is configured to display an extended reality (XR) image, i.e. an augmented reality (AR) image, a mixed reality (MR) image, and/or a virtual reality (VR) image.

For example, the XR device may be a head-mounted display, e.g. an electronic wearable having the shape of glasses. However, it is to be understood that the XR device may be established as any other XR-capable electronic device, e.g. as a smartphone or as a tablet.

Moreover, the term "XR image" is understood to denote at least one virtual image.

In the case of augmented reality or mixed reality, the XR image corresponds to at least one virtual image that is superimposed over reality. For example, the XR image may correspond to a 3D model of the recognized object.

The XR device may be a head-mounted display with a semi-transparent display, wherein the virtual image is displayed on the semi-transparent display, such that the user can directly see the environment through the semi-transparent display, but with the virtual image superimposed and aligned with a particular real-world object.

As another example, the XR device may be a head-mounted display that is optically opaque. In this case, the head-mounted display may comprise at least one internal camera, particularly several internal cameras being configured to capture images of the environment of the head-mounted display. The real images captured by means of the internal camera are superimposed and aligned with the virtual image(s), and the resulting superposition of the real image(s) and the augmented reality image(s) is displayed on a display of the head-mounted display.

As another example, the XR device may be a smartphone or a tablet, wherein an image captured by means of a camera of the XR device is superimposed with the at least one virtual image, and the resulting image is displayed on a display.

In the case of virtual reality, the XR image corresponds to a virtual image being generated based on a recognized real-world object and being displayed on a display of the XR device.

For example, the XR device may be a head-mounted display that is optically opaque. The VR images may be displayed on a display of the head-mounted display.

Further, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

Particularly, the XR application module comprises a computer program comprising program code means that are executable on the hardware of the XR application module, particularly on a processing unit of the XR application module.

In general, the XR application module corresponds to an XR application that is configured to generate XR images to be displayed on the XR device.

For example, the XR application may be an engineering application that is configured to generate XR images associated with a 3D model of an object, e.g. of a car, of an engine, or of any other object.

In a particular example, a car may be recognized in the at least one image captured by means of the at least one camera, and may be superimposed with a 3D model of the car.

However, it is to be understood that the XR application may be any other type of augmented reality, mixed reality, or virtual reality application, e.g. a game or a metaverse application.

The recognized real-world object(s) may be superimposed with the generated XR image(s), such that a predetermined alignment between the displayed XR image(s) and the real-world object(s) is provided, resulting in stable, world-anchored XR images or holograms.

The XR object alignment method according to the present invention is based on the idea to outsource the computationally expensive alignment procedure from the XR device to an external computer device, such as a server, a personal computer, etc.

In general, the external computer device can provide more computational resources than the XR device, as the XR device usually is portable or even wearable, such that the acceptable size and weight of the XR device is limited.

Moreover, the XR device may be powered by a battery, which further constrains the maximum computational power of the XR device.

However, no such limitations apply to the external computer device, such that even complex alignment and tracking algorithms can be performed by the external computer device, particularly in real time, irrespective of the computational capacities of the XR device.

The results of the alignment performed by the external computer device, i.e. the object data and the relative position data, are forwarded or rather streamed to the XR application module for further processing, namely for generating the XR image(s).

Therein, the external computer device may employ any suitable alignment method or tracking method known in the state of the art. For example, the external computer device may be configured to perform image tracking, QR-Code tracking (and reading), model tracking of 3D objects, identification of spatial objects or anchors, image recognition, and/or pattern recognition.

Particularly, the external computer device may comprise a machine-learning module that is pre-trained to perform the alignment or tracking process. For example, the machine-learning module may comprise an artificial neural network that is pre-trained to perform the alignment or tracking process.

It is to be understood that the XR object alignment method described above may be performed several times, e.g. in predefined time intervals, such that a tracking of the at least one recognized object may be performed.

According to an aspect of the present invention, the XR device comprises the XR application module. Alternatively or additionally, the external computer device comprises the XR application module. Thus, the XR application module generating the XR images to be displayed on the XR device may be integrated into the XR device and/or into the external computer device.

If the XR application module is integrated into the XR device, the results of the alignment performed by the external computer device, i.e. the object data and the relative position data, are forwarded or rather streamed to the XR device. The XR device then generates the XR image(s) to be displayed on the XR device based on the received object data and the relative position data.

If the XR application module is integrated into the external computer device, the external computer device performs the alignment and generates the XR image(s) to be displayed on the XR device based on the object data and the relative position data. The XR image(s) to be displayed are then streamed to the XR device.

In other words, the XR device may function as a display, while the alignment procedure and the XR application are outsourced to the external computer device. Thus, the necessary computational power of the XR device is reduced even further.

In a further embodiment of the present disclosure, the at least one XR image is aligned with the at least one recognized object. Thus, the corresponding recognized real-world object(s) are overlaid with the generated XR image(s), such that a predetermined alignment between the displayed XR image(s) and the real-world object(s) is provided. Accordingly, stable, world-anchored XR images, e.g. holograms, are provided.

According to another aspect of the present invention, the XR device comprises at least one position sensor, wherein the momentary position data is determined by means of the at least one position sensor. Accordingly, the XR device may be configured to determine the momentary position data based on measurements conducted by means of the at least one position sensor. The XR device streams the determined momentary position data to the external computer device.

Alternatively, measurement data obtained by means of the at least one position sensor may be streamed to the external computer device, and the external computer device may determine the momentary position data based on the measurement data.

Alternatively or additionally, the momentary position data may be determined by means of at least one external camera, particularly by means of an external stereo camera or several external cameras. The at least one external camera may be connected to an analysis module that is configured to determine the momentary position data based on images of the XR device captured by means of the at least one external camera.

The analysis module may be integrated into the XR device or into the external computer device.

Optionally, the XR device may comprise one or several light-emitting elements, particularly one or several LEDs. The analysis module may determine the momentary position data based on images of the one or several light-emitting elements captured by means of the at least one external camera, particularly via triangulation.

Further, it is also conceivable that the analysis module may determine the momentary position data based on images captured by means of the at least one camera of the XR device.

For example, the at least one position sensor comprises a gyroscope, an accelerometer, a magnetometer, and/or a positioning sensor. The positioning sensor may be a global navigation satellite system (GNSS) device that is configured to determine the momentary position data based on GNSS, for example based on the GPS or the Galileo system.

In an embodiment of the present disclosure, object position data is determined by means of the external computer device, wherein the object position data is associated with a position of the at least one recognized object. In other words, the position of the at least one recognized object may be determined with respect to a predefined reference point. The predefined reference point may correspond to the at least one camera of the XR device. In this case, the object position data may be identical to the relative position data.

However, the predefined reference point may correspond to any other point on the XR device or in a real environment or virtual environment around the XR device.

The relative position data may be determined based on the momentary position data and based on the object position data. In other words, both the momentary position data and the object position data may be determined with respect to a predefined reference point or with respect to different predefined reference points, as described above. The relative position data can be determined by an appropriate transformation of the object position data and/or the momentary position data into a common coordinate system. In the common coordinate system, the relative position data corresponds to the difference between the momentary position data and the object position data, or vice versa.

According to an aspect of the present invention, the momentary position data is associated with a position of the at least one camera. In other words, the momentary position data comprises information about the position of the at least one camera, rather than information about the position of other parts of the XR device.

According to another aspect of the present invention, the image data and/or the XR image data comprises information on a view matrix and/or a projection matrix. In general, the XR image to be displayed may comprise virtual, world-anchored objects, particularly virtual 3D objects. Accordingly, these virtual objects may be defined in a fixed coordinate space having its origin in a real environment or in a virtual environment of the XR device. This coordinate space may also be called "world space".

The view matrix comprises all information necessary in order to transform objects from the world space to the view space, wherein the view space is associated with the XR device, particularly with the at least one camera of the XR device. In the view space, the at least one camera may rest at the origin, particularly wherein the main view direction of the XR device and/or the at least one camera is along the z-axis.

In other words, the view matrix comprises all information necessary in order to transform the virtual objects, particularly the virtual 3D objects, such that these objects can be correctly displayed in view of the position of the XR device.

Thus, as the location and orientation of the XR device changes, the view matrix changes as well. Accordingly, the view matrix may be time-variant.

Particularly, the view matrix may be determined based on the determined momentary position of the XR device or of the at least one camera of the XR device.

The projection matrix comprises all information necessary in order to project objects from the view space into the projection space, wherein the projection space is associated with the XR device, particularly with the at least one camera of the XR device. In general, this projection of objects into the projection space allows to correctly displaying virtual (3D) objects on the XR device.

Particularly, the view matrix and/or the projection matrix relate to the at least one camera. Thus, it is ensured that the at least one XR image is displayed correctly. Particularly, in the case of AR or MR, it is ensured that the at least one XR image is correctly overlaid with the real environment.

In an embodiment of the present invention, internal camera data is determined by means of the XR device, wherein the internal camera data is associated with internal settings of the at least one camera. The internal camera data is transmitted to the external computer device. The at least one object is recognized based on the internal camera data. Alternatively or additionally, the relative position data is determined based on the internal camera data. In general, the internal camera data provides additional information that may be useful for recognizing the at least one object and/or for determining the position of the at least one object. Particularly, the processing speed and/or the accuracy of the object recognition may be enhanced if the internal camera data is provided to the external computer device. Further, the processing speed and/or the accuracy of determining the relative position data may be enhanced if the internal camera data is provided to the external computer device.

For example, the internal camera data may comprise information about a focal length of the at least one camera, a lens distortion of the at least one camera, a resolution of the at least one camera, a frame rate of the at least one camera, and/or at least one camera calibration parameter.

According to the invention, the problem further is solved by an XR projection system. The XR projection system comprises an external computer device, an XR application module, and an XR device with at least one camera. The XR projection system is configured to perform the method described above.

Regarding the advantages and further properties of the XR projection system, reference is made to the explanations given above with respect to the XR alignment method, which also hold for the XR projection system and vice versa.

According to an aspect of the present invention, the XR device comprises the XR application module. Alternatively or additionally, the external computer device comprises the XR application module. Thus, the XR application module generating the XR images to be displayed on the XR device may be integrated into the XR device and/or the external computer device.

If the XR application module is integrated into the XR device, the results of the alignment performed by the external computer device, i.e. the object data and the relative position data, are forwarded or rather streamed to the XR device. The XR device then generates the XR image(s) to be displayed on the XR device based on the received object data and the relative position data.

If the XR application module is integrated into the external computer device, the external computer device performs the alignment and generates the XR image(s) to be displayed on the XR device based on the object data and the relative position data. The XR image(s) to be displayed are then streamed to the XR device.

In other words, the XR device may function as a display, while the complete alignment and the XR application are outsourced to the external computer device. Thus, the necessary computational power of the XR device is reduced even further.

According to another aspect of the present invention, the at least one camera is operable in the visible light spectrum and/or in the infrared spectrum. For example, the XR device may comprise at least one camera being operable in the visible light spectrum, and at least one camera being operable in the infrared spectrum. Thus, information from different spectral ranges may be provided for the alignment process, i.e. for recognizing the at least one object and for determining the position of the at least one object, which may enhance the precision and/or the speed of the alignment process.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a block diagram of an XR projection system according to the present invention;
- Figure 2 schematically shows an exemplary embodiment of the XR projection system of Figure 1; and
- Figure 3 shows a flow chart of an XR object alignment method according to the present invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

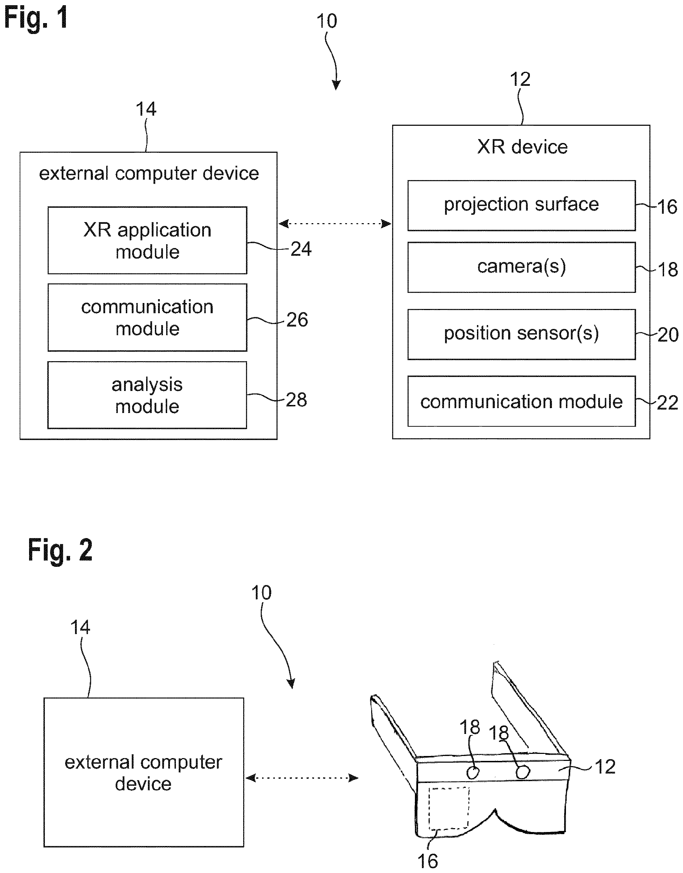

Figure 1 schematically shows a block diagram of an XR projection system 10 comprising an XR device 12 and an external computer device 14 being connected with the XR device 12 in a signal-transmitting manner.

Therein and in the following, the term "connected in a signal transmitting manner" is understood to denote a cable-based or wireless connection that is configured to transmit signals between the respective devices or components.

In general, the XR device 12 is an electronic device that is configured to display an extended reality (XR) image, i.e. an augmented reality (AR) image, a mixed reality (MR) image, and/or a virtual reality (VR) image.

As is illustrated in Figure 2, the XR device 12 may, for example, be configured as a head-mounted display, particularly as an electronic wearable having the shape of glasses.

However, it is to be understood that the XR device 12 may be established as any other XR-capable electronic device, e.g. as a smartphone or as a tablet.

In general, the XR projection system 10 allows a user to observe and/or interact with virtual objects, particularly virtual 3D objects.

If the XR projection system 10 is an AR projection system or an MR projection system, these virtual objects are embedded into a real environment of the user.

Accordingly, the XR device 12 comprises at least one projection surface 16, wherein an XR image to be displayed is projected onto the projection surface 16, such that the virtual object is displayed to the user.

The projection surface 16 may be a display of the XR device 12.

Optionally, the XR projection system 10 may comprise at least one handheld input device (not shown in Figure 1), wherein the user may control the XR projection system 10 by means of the at least one handheld input device.

For example, the at least one handheld input device may be established as a pen-shaped device or as any other type of suitable input device.

The XR device 12 further comprises at least one camera 18, at least one position sensor 20, and a communication module 22.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

The at least one camera 18 is configured to capture images of an environment of the XR device 12, particularly of an environment in front of the XR device 12.

Particularly, the at least one camera 18 may be established as a stereo camera. Alternatively or additionally, the XR device 12 may comprise several cameras with overlapping field of view. Thus, depth-information on images taken by the at least one camera 18 can be determined based on images taken by the at least one camera 18.

The at least one camera 18 may be operable in the visible light spectrum and/or in the infrared spectrum. For example, the XR device 12 may comprise at least one camera 18 being operable in the visible light spectrum, and at least one camera 18 being operable in the infrared spectrum.

The at least one position sensor 20 is configured to determine a position, i.e. a location and/or orientation of the XR device 12.

For example, the at least one position sensor 20 may be established as a gyroscope, as an acceleration sensor, as a magnetometer, as a GNSS device, and/or as any other suitable type of position sensor.

In general, the external computer device 14 may be established as any type of electronic computing device that is configured to have the functionality described below.

For example, the external computer device 14 may be established as a server with suitable hardware and with suitable software being executed on the hardware.

As another example, the external computer device 14 may be established as a personal computer, as a laptop, as a notebook, as a MAC, as a tablet, as a smartphone, or as any other type of smart device.

The external computer device 14 comprises an XR application module 24, a communication module 26, and an analysis module 28.

The functionality of the individual modules will be described in more detail below.

The XR application module 24 corresponds to an XR application that is configured to generate XR images to be displayed on the XR device 12.

For example, the XR application may be an engineering application that is configured to generate XR images associated with a 3D model of an object, e.g. of a car, of an engine, or of any other object.

However, it is to be understood that the XR application may be any other type of augmented reality, mixed reality, or virtual reality application, e.g. a game or a metaverse application.

The communication module 22 of the XR device 12 and the communication module 26 of the external computer device 14 are configured to communicate with each other.

In fact, image data, sensor data, position data and/or control data may be exchanged between the XR device 12 and the external computer device 14 by means of the communication modules 22, 26.

Therein, any suitable wireless or cable-based transmission technique may be used by the communication modules 22, 26, e.g. WLAN, 4G, 5G, Ethernet, etc.

It is noted that the embodiment of the XR projection system 10 illustrated in Figures 1 and 2 is understood to be exemplary.

In fact, the XR application module 24 may be integrated into the XR device 12 partially or completely.

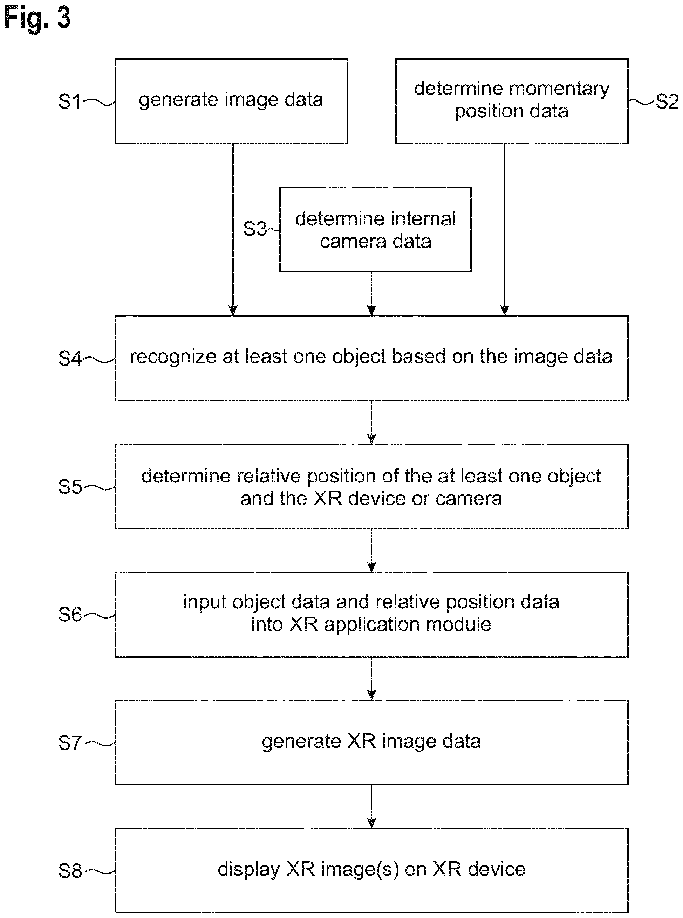

The XR projection system 10 is configured to perform an XR object alignment method for aligning an XR image with a real object in a field of view of the XR device 12, which his described in the following with reference to Figure 3.

At least one image is captured by means of the at least one camera 18 of the XR device 12, thereby generating image data associated with the at least one image (step S1).

The generated image data is transmitted to the external computer device 14, more precisely to the analysis module 28, via the communication modules 22, 26.

Further, momentary position data is determined, wherein the momentary position data is associated with a momentary location and/or orientation of the XR device 12 (step S2).

The momentary position data may be determined by means of the at least one position sensor 20. Accordingly, the XR device 12 may be configured to determine the momentary position data based on measurements conducted by means of the at least one position sensor 20.

The determined momentary position data is transmitted to the external computer device 14, more precisely to the analysis module 28, via the communication modules 22, 26.

Alternatively, measurement data obtained by means of the at least one position sensor 20 may be streamed to the external computer device 14 or more precisely to the analysis module 28 via the communication modules 22, 26. The analysis module 28 may determine the momentary position data based on the measurement data.

Optionally, internal camera data is determined by means of the XR device 12, wherein the internal camera data is associated with internal settings of the at least one camera 18 (step S3).

For example, the internal camera data may comprise information about a focal length of the at least one camera 18, a lens distortion of the at least one camera 18, a resolution of the at least one camera 18, a frame rate of the at least one camera 18, and/or at least one camera calibration parameter.

The internal camera data may be transmitted to the external computer device 14, more precisely to the analysis module 28, via the communication modules 22, 26.

Optionally, spatial awareness data may be determined by means of the analysis module 28 or by means of the XR application module 24, particularly based on data received from the at least one position sensor 20 and/or based on the image data.

For example, the spatial awareness data may relate to spatial anchors, a spatial mesh, and/or to hand positions of a user.

At least one object is recognized in the at least one image by means of the analysis module 28 based on the image data, thereby obtaining object data (step S4).

Optionally, the at least one object is recognized based on the image data as well as based on the internal camera data and/or the spatial awareness data.

Therein, any suitable known recognition technique may be used.

For example, the analysis module 28 may be configured to perform image tracking, QR-Code tracking (and reading), model tracking of 3D objects, identification of spatial objects or anchors, image recognition, and/or pattern recognition.

Particularly, the analysis module 28 may comprise a machine-learning module that is pre-trained to perform the alignment or tracking process. For example, the machine-learning module may comprise an artificial neural network that is pre-trained to perform the alignment or tracking process.

Relative position data is determined by means of the analysis module 28 based on the object data and based on the momentary position data (step S5).

Optionally, the relative position data is determined based on the object data and based on the momentary position data, as well as based on the internal camera data and/or the spatial awareness data.

In general, the relative position data describes a relative position of the XR device 12 and the at least one recognized object, particularly a relative position of the at least one camera 18 and the at least one recognized object.

In order to determine the relative position data, the position of the at least one recognized object may be determined by means of the analysis module 28 with respect to a predefined reference point, thereby obtaining object position data.

The predefined reference point may correspond to the at least one camera 18 of the XR device 12. In this case, the object position data may be identical to the relative position data.

However, the predefined reference point may correspond to any other point on the XR device 12 or in a real environment or virtual environment around the XR device 12.

In this case, the relative position data may be determined based on the momentary position data and based on the object position data.

In other words, both the momentary position data and the object position data may be determined with respect to a predefined reference point or with respect to different predefined reference points, as described above.

The relative position data can be determined by an appropriate transformation of the object position data and/or the momentary position data into a common coordinate system. In the common coordinate system, the relative position data corresponds to the difference between the momentary position data and the object position data, or vice versa.

Optionally, the XR projection system 10 may be configured to account for delays that are introduced by the external alignment procedure described above, namely by streaming the data from the XR device 12 to the external computer device 14.

More precisely, the results of the alignment or tracking procedure, i.e. the object data and the relative position data, may be provided with a tag, for example with a time stamp, that indicates the time at which the momentary position data has been determined.

Thus, it is ensured that the results of the alignment or tracking are applied correctly, namely retroactively to the corresponding past position of the XR device 12 described by the momentary position data.

Particularly, it is ensured that the results of the alignment or tracking are applied correctly in the steps described below.

The object data and the relative position data are input into the XR application module 24 (step S6).

XR image data is generated by means of the XR application module 24, wherein the XR image data is associated with at least one XR image to be displayed on the projection surface 16 of the XR device 12 (step S7).

Therein, the term "XR image" is understood to denote at least one virtual image.

More precisely, the XR image corresponds to at least one virtual image that is superimposed over reality.

For example, the XR image may correspond to a 3D model of the recognized object.

In a particular example, a car may be recognized in the at least one image captured by means of the at least one camera 18. In this case, the XR image may correspond to a 3D model of the whole car or of certain portions of the car, e.g. of the chassis of the car or of the engine of the car.

However, the XR image may be any other type of virtual object, for example a virtual text field, a virtual label, a virtual sign, a virtual image, etc.

The XR image data is streamed to the XR device 12 via the communication modules 22, 26, and is displayed on the projection surface 16 of the XR device 12 (step S8).

Therein, the XR image is aligned with the at least one recognized object in a predetermined manner, such that a stable, world-anchored XR image is displayed on the projection surface 16 of the XR device.

In order to facilitate the correct alignment of the XR image and the at least one recognized object, the image data and/or the XR image data may comprise information on a view matrix and/or a projection matrix.

In general, the XR image to be displayed may comprise virtual, world-anchored objects, particularly virtual 3D objects. Accordingly, these virtual objects may be defined in a fixed coordinate space having its origin in a real environment or in a virtual environment of the XR device 12. This coordinate space may also be called "world space".

The view matrix comprises all information necessary in order to transform objects from the world space to the view space, wherein the view space is associated with the XR device 12, particularly with the at least one camera 18 of the XR device 12. In the view space, the at least one camera 18 may rest at the origin, particularly wherein the main view direction of the XR device 12 and/or the at least one camera 18 is along the z-axis.

In other words, the view matrix comprises all information necessary in order to transform the virtual objects, particularly the virtual 3D objects, such that these objects can be correctly displayed in view of the position of the XR device 12.

Thus, as the location and orientation of the XR device 12 changes, the view matrix changes as well. Accordingly, the view matrix may be time-variant.

Particularly, the view matrix may be determined based on the determined momentary position of the XR device 12 or of the at least one camera 18 of the XR device 12.

The projection matrix comprises all information necessary in order to project objects from the view space into the projection space, wherein the projection space is associated with the XR device 12, particularly with the at least one camera 18 of the XR device 12. In general, this projection of objects into the projection space allows to correctly displaying virtual (3D) objects on the projection surface 16 of the XR device 12.

Particularly, the view matrix and/or the projection matrix relate to the at least one camera 18. Thus, it is ensured that the at least one XR image is displayed correctly on the projection surface 16 of the XR device 12.

Particularly, in the case of AR or MR, it is ensured that the at least one XR image is correctly overlaid with the real environment and is properly aligned with the at least one recognized object.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. An extended reality (XR) object alignment method for aligning an XR image with a real object in a field of view of an XR device (12), wherein the XR device (12) comprises at least one camera (18), wherein the object alignment method comprises the following steps:
- capturing, by means of the at least one camera (18) of the XR device (12), at least one image, thereby generating image data associated with the at least one image;
- determining momentary position data, wherein the momentary position data is associated with a momentary position of the XR device (12);
- transmitting the generated image data to an external computer device (14) that is connected with the XR device (12) in a signal-transmitting manner;
- recognizing, by means of the external computer device (14), at least one object in the at least one image based on the image data, thereby obtaining object data;
- determining, by means of the external computer device (14), relative position data based on the object data and based on the momentary position data, wherein the relative position data is associated with a relative position of the XR device (12) and the at least one recognized object;
- inputting the object data and the relative position data into an XR application module (24); and
- generating, by means of the XR application module (24), XR image data based on the object data and based on the relative position data, wherein the XR image data is associated with at least one XR image to be displayed on the XR device (12).

2. The XR object alignment method of claim 1, wherein the XR device (12) comprises the XR application module (24) and/or wherein the external computer device (14) comprises the XR application module (24).

3. The XR object alignment method according to any one of the preceding claims, wherein the at least one XR image is aligned with the at least one recognized object.

4. The XR object alignment method according to any one of the preceding claims, wherein the XR device (12) comprises at least one position sensor (20), wherein the momentary position data is determined by means of the at least one position sensor (20).

5. The XR object alignment method of claim 4, wherein the at least one position sensor (20) comprises a gyroscope, an accelerometer, a magnetometer, and/or a positioning sensor.

6. The XR object alignment method according to any one of the preceding claims, wherein object position data is determined by means of the external computer device (14), wherein the object position data is associated with a position of the at least one recognized object.

7. The XR object alignment method of claim 6, wherein the relative position data is determined based on the momentary position data and based on the object position data.

8. The XR alignment method according to any one of the preceding claims, wherein the momentary position data is associated with a position of the at least one camera (18).

9. The XR alignment method according to any one of the preceding claims, wherein the image data and/or the XR image data comprises information on a view matrix and/or a projection matrix.

10. The XR alignment method according to claims 8 and 9, wherein the view matrix and/or the projection matrix relate to the at least one camera (18).

11. The XR alignment method according to any one of the preceding claims, wherein internal camera data is determined by means of the XR device (12), wherein the internal camera data is associated with internal settings of the at least one camera (18), wherein the internal camera data is transmitted to the external computer device (14), and
wherein the at least one object is recognized based on the internal camera data, and/or wherein the relative position data is determined based on the internal camera data.

12. The XR alignment method of claim 11, wherein the internal camera data comprises information about a focal length of the at least one camera (18), a lens distortion of the at least one camera (18), a resolution of the at least one camera (18), a frame rate of the at least one camera (18), and/or at least one camera calibration parameter.

13. An XR projection system, comprising an external computer device (14), an XR application module (24), and an XR device (12) with at least one camera (18), wherein the XR projection system (10) is configured to perform the method according to any one of the preceding claims.

14. The XR projection system of claim 13, wherein the XR device (12) comprises the XR application module (24) and/or wherein the external computer device (14) comprises the XR application module (24).

15. The XR projection system according to claim 13 or 14, wherein the at least one camera (18) is operable in the visible light spectrum and/or in the infrared spectrum.
